# EUROPEAN PATENT APPLICATION

(11) **EP 4 541 522 A1**
(43) Date of publication of application: **23.04.2025**
(21) Application number: 23823671.5
(22) Date of filing: 29.05.2023
(51) Int. Cl.: B25J 9/22, G05B 19/42, B23K 9/12

(54) **WELDING ROBOT SYSTEM AND WELDING ASSISTANCE METHOD**

(30) Priority: 17.06.2022 JP 2022098244
(71) Applicant: Panasonic Intellectual Property Management Co., Ltd., Kadoma-shi, Osaka 571-0057 (JP)
(72) Inventor: NAKATA, Hiroyuki, Kadoma-shi, Osaka 571-0057 (JP); HASHIMOTO, Atsumi, Kadoma-shi, Osaka 571-0057 (JP); YAMAMOTO, Ryosuke, Kadoma-shi, Osaka 571-0057 (JP); UEDA, Hiroyoshi, Kadoma-shi, Osaka 571-0057 (JP); IWATANI, Masayoshi, Kadoma-shi, Osaka 571-0057 (JP)
(74) Representative: Novagraaf International SA
(86) International application number: PCT/JP2023/019840
(87) International publication number: WO 2023/243373

(57) **Abstract**

A welding robot system includes a robot that performs welding on a workpiece, a workpiece holding device that holds the workpiece, and a control device connected to the robot and the workpiece holding device. The control device acquires teaching related to the robot and the workpiece holding device, controls the robot and the workpiece holding device to perform cooperative operation based on the teaching, and calculates and outputs an absolute speed of the robot during the cooperative operation and an absolute speed of the workpiece holding device during the cooperative operation.

## Description

### TECHNICAL FIELD

The present disclosure relates to a welding robot system and a welding assistance method.

### BACKGROUND ART

PTL 1 discloses a robot control device that controls operation of a robot that performs predetermined work on a workpiece moved by a conveyance device. A robot control device stores a conveyance speed serving as a reference of a conveyance device, stores a movement speed serving as a reference of a robot arm corresponding to the conveyance speed serving as the reference, detects an actual conveyance speed of the conveyance device, corrects the reference movement speed on the basis of the actual conveyance speed and the reference conveyance speed, and calculates a movement speed command value of the robot arm.

### Citation List

### Patent Literature

PTL 1: Unexamined Japanese Patent Publication No. H09-85657

### SUMMARY OF THE INVENTION

### Technical problem

The present disclosure provides a welding robot system and a welding assistance method that assist teaching of cooperative operations performed by a plurality of different devices.

### Solution to problem

A welding robot system according to one aspect of the present disclosure includes a robot that performs welding on a workpiece, a workpiece holding device that holds the workpiece, and a control device connected to the robot and the workpiece holding device. The control device provides a welding robot system that acquires teaching relating to the robot and the workpiece holding device, controls the robot and the workpiece holding device to perform cooperative operation on the basis of the teaching, and calculates and outputs an absolute speed of the robot during the cooperative operation and an absolute speed of the workpiece holding device during the cooperative operation.

The welding assistance method according to one aspect of the present disclosure provides a welding assistance method performed by a system including: a robot that performs welding on a workpiece; a workpiece holding device that holds the workpiece; and a control device connected to the robot and the workpiece holding device, the method including: acquiring teaching related to the robot and the workpiece holding device, controlling the robot and the workpiece holding device to perform cooperative operation based on the teaching, and calculating and outputting an absolute speed of the robot during the cooperative operation and an absolute speed of the workpiece holding device during the cooperative operation.

### Advantageous effect of invention

According to the present disclosure, it is possible to assist teaching of cooperative operations performed by a plurality of different devices.

### BRIEF DESCRIPTION OF THE DRAWINGS

Fig. 1 is a schematic diagram illustrating a system configuration example of a welding system according to an exemplary embodiment.
Fig. 2 is a diagram illustrating an internal configuration example of a robot control device according to the exemplary embodiment.
Fig. 3 is a diagram for explaining various types of data communicated among a teach pendant, a robot control device, and a manipulator.
Fig. 4 is a diagram illustrating an internal configuration example of a drive unit of the robot control device and each arm control unit of the manipulator.
Fig. 5 is a block diagram illustrating an example of control signals of a first servo control unit and a first arm control unit.
Fig. 6 is a flowchart illustrating a first operation procedure example of the robot control device according to the exemplary embodiment.
Fig. 7 is a flowchart illustrating a second operation procedure example of the robot control device in the exemplary embodiment.
Fig. 8 is a diagram for explaining a teaching program and operation examples of a welding robot and a positioner.
Fig. 9 is a diagram for explaining an example of operation of the manipulator and the positioner in normal cooperation.
Fig. 10 is a table for explaining calculation results of a movement amount and an absolute speed of the manipulator and the positioner in normal cooperation.
Fig. 11 is a diagram for explaining an example in which the operations of the manipulator and the positioner are abnormally coordinated.
Fig. 12 is a table for explaining calculation results of a movement amount and an absolute speed of the manipulator and the positioner in normal cooperation.
Fig. 13 is a view illustrating an example of a work result screen of the manipulator and the positioner.

### DESCRIPTION OF EMBODIMENT

### (Background to the present disclosure)

As in PTL 1, there is a conventional control device that coordinates a conveyance device that constantly or intermittently moves a workpiece and a robot that performs a predetermined work on the workpiece. The control device cooperatively operates the conveyance device and the robot so that the robot can perform a predetermined work on the workpiece conveyed by the conveyance device. Specifically, the control device measures the actual conveyance speed of the conveyance device, and corrects the movement speed of the robot arm on the basis of the measured conveyance speed to realize the cooperative operation.

Conventionally, there is a control device that cooperatively operates a welding robot that performs welding and a positioner that supports a workpiece and can change an attitude of the workpiece in welding. Such a control device executes the cooperative operation of each of the welding robot and the positioner on the basis of a teaching program taught by the worker in advance. The worker uses a teach pendant to teach the welding robot about the relative speed with respect to the positioner and teach the positioner about the relative speed with respect to the welding robot.

Here, the relative speed taught by the worker is different from the actual speed (hereinafter, expressed as "absolute speed") of each of the welding robot and the positioner corresponding to the taught relative speed. Therefore, the worker needs to correct the teaching content on the basis of the absolute speed corresponding to the taught relative speed. However, in order to confirm the absolute speed of each of the welding robot and the positioner with respect to the taught relative speed, the worker needs to analyze measurement data and the like regarding the welding robot and the positioner during work by a personal computer (PC) or the like, which is troublesome.

Further, when the absolute speed fluctuates or is too fast during the cooperative operation, the welding robot and the positioner may be vibrated at the time of driving, the following delay may occur, and the locus accuracy may be deteriorated in each of the welding robot and the positioner. Therefore, when it is difficult for the worker to know the absolute speed of each of the welding robot and the positioner, even if the teaching content is corrected, it is difficult for the worker to determine whether or not the locus accuracy can be deteriorated or the welding quality can be improved by the corrected teaching content.

Hereinafter, each exemplary embodiment specifically disclosing a welding robot system and a welding assistance method according to the present disclosure will be described in detail with reference to the drawings as appropriate. However, unnecessarily detailed description may be omitted. For example, a detailed description of a well-known matter and a repeated description of substantially the same configuration may be omitted. This is to avoid unnecessary redundancy of the following description and to facilitate understanding of those skilled in the art. Note that the appended drawings and the following descriptions are provided for those skilled in the art to fully understand the present disclosure, and are not intended to limit the subject matter set forth in the claims in any way.

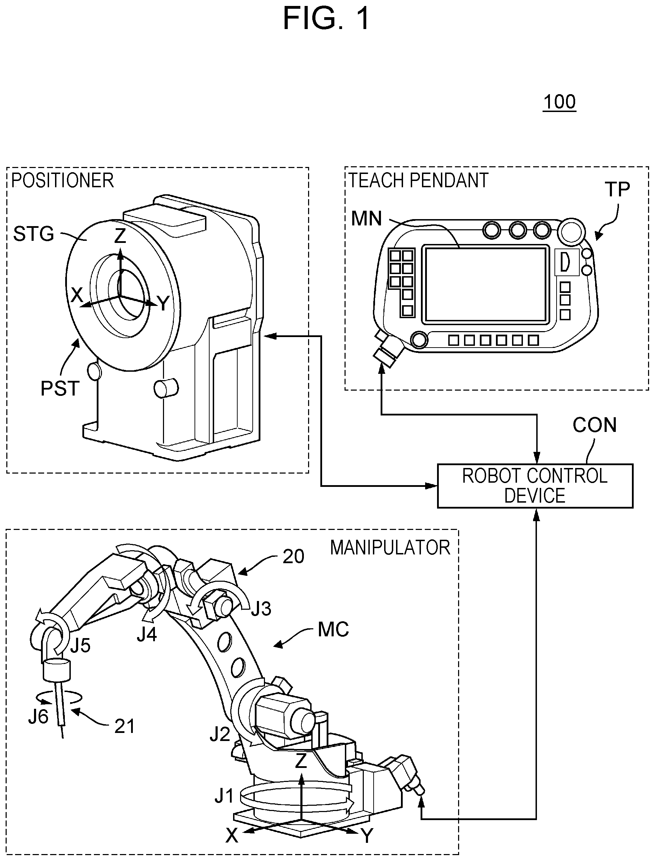

First, a configuration of welding system 100 according to an exemplary embodiment will be described. Fig. 1 is a schematic diagram illustrating a system configuration example of welding system 100 according to the exemplary embodiment.

Welding system 100 according to the exemplary embodiment is an example of a welding robot system, and includes teach pendant TP, robot control device CON, manipulator MC, and positioner PST.

Teach pendant TP as an example of a teaching device is connected to robot control device CON so as to be able to transmit and receive data. Teach pendant TP is operated by a worker who performs teaching of manipulator MC and positioner PST. Teach pendant TP includes an input interface, receives a worker's operation for operating or teaching each of manipulator MC and positioner PST, converts the worker's operation into an electric signal, and transmits the electric signal to robot control device CON.

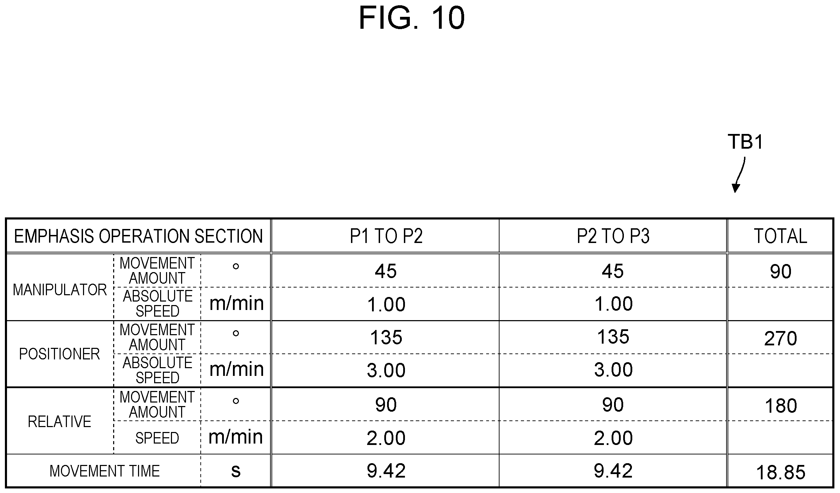

Teach pendant TP includes monitor MN, and acquires work result information including the calculation result of the absolute speed of each of manipulator MC and positioner PST transmitted from robot control device CON. Teach pendant TP generates work result screen SC1 (see Fig. 10) on the basis of the work result information, and outputs work result screen SC1 to monitor MN to display.

Robot control device CON as an example of the control device is connected to each of teach pendant TP, manipulator MC, and positioner PST so as to be able to transmit and receive data to and from each of them. Robot control device CON generates a teaching program of manipulator MC or positioner PST on the basis of the electric signal transmitted from teach pendant TP. Robot control device CON executes control or cooperative control of manipulator MC or positioner PST on the basis of the generated teaching program.

The teaching program for manipulator MC is generated by including information on each welding section to be welded using welding torch 21 (for example, a start point, an end point, and the like of the welding section), information on the position, distance, angle (attitude), operation speed, and the like of welding torch 21 for executing various operations for executing welding (for example, idle running, approach, retract, avoidance, and the like), information on welding conditions, and the like.

Here, the operation speed of manipulator MC in the section (hereinafter, referred to as a "cooperative operation section") in which manipulator MC cooperatively operates with positioner PST indicates the relative speed of manipulator MC with respect to positioner PST. The operation speed of manipulator MC in the section that is not the cooperative operation section simply indicates the absolute speed of manipulator MC.

In addition, the teaching program of positioner PST is generated by including information such as information of the shape, attitude, position, and the like of each workpiece fixedly held by positioner PST and information (for example, the operation speed) related to the attitude change of the workpiece.

The operation speed of positioner PST in the cooperative operation section indicates the relative speed of positioner PST with respect to manipulator MC. The operation speed of positioner PST in the section that is not the cooperative operation section simply indicates the absolute speed of positioner PST.

Robot control device CON receives the information on the absolute speed of welding torch 21 transmitted from manipulator MC. Robot control device CON receives the information on the absolute speed of workpiece fixing table STG that fixedly holds the workpiece transmitted from positioner PST. Robot control device CON calculates the absolute speed of each of manipulator MC and positioner PST in the cooperative operation section on the basis of the information on the absolute speed of welding torch 21 and the information on the absolute speed of workpiece fixing table STG. Robot control device CON generates work result information including calculation results of the absolute speeds of manipulator MC and positioner PST, transmits the work result information to teach pendant TP, and displays the work result information.

Work result screen SC1 may be generated by teach pendant TP. In such a case, robot control device CON transmits information on the absolute speed of each of manipulator MC and positioner PST in the cooperative operation section to teach pendant TP as information on the welding work result.

Manipulator MC is connected to robot control device CON so as to be able to transmit and receive data to and from robot control device CON. Manipulator MC in the present exemplary embodiment is, for example, a six-axis robot including six arms. Manipulator MC includes first axis J1 rotatable about the Z axis, second axis J2 rotatable about the Y axis, third axis J3 rotatable about the Y axis, fourth axis J4 rotatable about the X axis, fifth axis J5 rotatable about the X axis, and sixth axis J6 rotatable about the Z axis.

Manipulator MC includes feed motor 20 that feeds a welding wire (not illustrated) toward the tip of welding torch 21, and welding torch 21 that performs welding. Manipulator MC is controlled by robot control device CON to perform welding on the workpiece held by positioner PST.

Positioner PST as an example of the workpiece holding device is connected to robot control device CON so as to be able to transmit and receive data. Positioner PST is controlled by robot control device CON to change the holding attitude of the workpiece for enabling welding by manipulator MC to be executed.

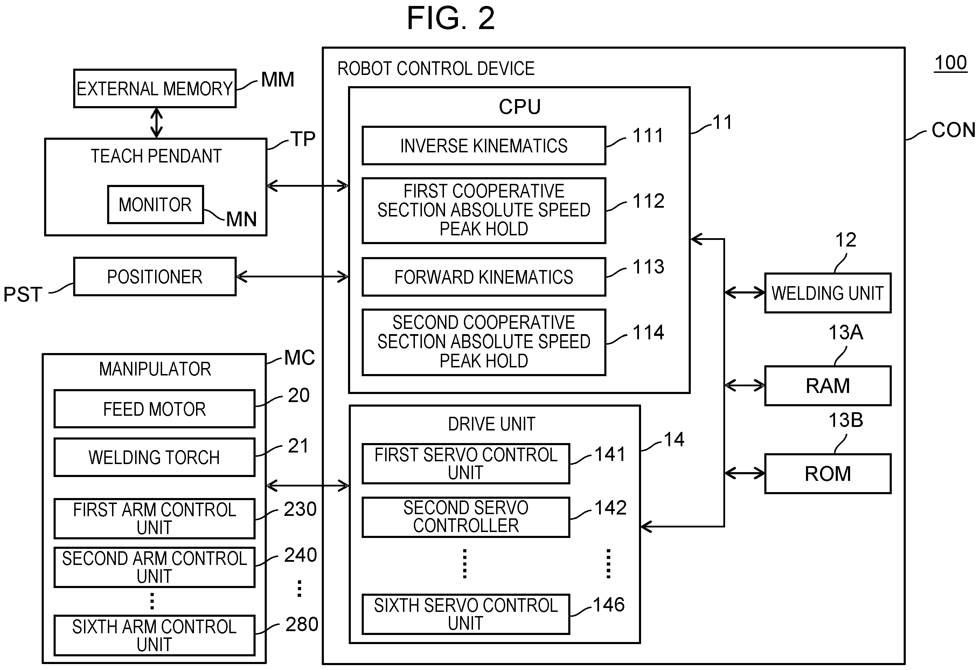

Next, an internal configuration of robot control device CON will be described with reference to Fig. 2. Fig. 2 is a diagram illustrating an internal configuration example of robot control device CON according to the exemplary embodiment. In addition, external memory MM is not essential and may be omitted.

Robot control device CON includes central processing unit (CPU) 11, welding unit 12, random access memory (RAM) 13A, read only memory (ROM) 13B, and drive unit 14.

CPU 11 performs various types of processing and control in cooperation with RAM 13A and ROM 13B. Specifically, CPU 11 refers to programs stored in RAM 13A and ROM 13B, and executes the programs to implement functions of welding unit 12, drive unit 14, and the like.

CPU 11 generates a teaching program for manipulator MC and a teaching program for positioner PST based on the electric signal transmitted from teach pendant TP. CPU 11 executes control of manipulator MC based on the generated teaching program of manipulator MC. CPU 11 controls positioner PST based on the generated teaching program of positioner PST. In the cooperative operation section, CPU 11 synchronously controls the operation of manipulator MC and the operation of positioner PST to execute the cooperative operation. Note that details of each unit (inverse kinematics 111, first cooperative section absolute speed peak hold 112, forward kinematics 113, second cooperative section absolute speed peak hold 114, and the like) of CPU 11 will be described later.

CPU 11 also generates a control command based on the parameter of the welding condition of the workpiece to be welded, and outputs the control command to welding unit 12. The parameter of the welding condition here is control information for controlling each of feed motor 20 and welding torch 21 in a welding step of welding a workpiece to manufacture the workpiece. The parameter of the welding condition includes control information (such as a wire feeding speed) output to feed motor 20 and control information related to welding power (welding current, welding voltage) output to welding torch 21.

The welding condition may include information other than the control information on the welding power of welding torch 21 described above. For example, the welding condition may include control information such as a welding method, a preflow gas time, an after-flow time, selection of the presence or absence of a pulse, a pulse current, a pulse frequency, a pulse width, selection of the presence or absence of a crater, an initial current, a crater current, an up-slope time, a down-slope time, an AC waveform, an AC frequency, an EN ratio, an AC/DC ratio, and an AC/DC frequency, voltage data (unified voltage data) that is centrally determined corresponding to the welding current, a coefficient representing a relationship between a plate thickness corresponding to the welding speed and the welding current, and a shape and a welding speed of the workpiece.

Based on the information on the absolute speed of welding torch 21 transmitted from manipulator MC, CPU 11 calculates and records the maximum value or the minimum value of the absolute speed of manipulator MC during the cooperative operation and the position where the absolute speed becomes the maximum value or the minimum value. Based on the information on the absolute speed of workpiece fixing table STG transmitted from positioner PST, CPU 11 calculates and records the maximum value or the minimum value of the absolute speed of positioner PST during the cooperative operation and the position where the absolute speed becomes the maximum value or the minimum value (hereinafter, referred to as "occurrence teaching point").

After the welding of the workpiece is completed, CPU 11 generates work result information including the maximum value or minimum value of the absolute speed of manipulator MC during the cooperative operation and the occurrence teaching point, and the maximum value or minimum value of the absolute speed of positioner PST and the occurrence teaching point. CPU 11 transmits the generated work result information to teach pendant TP and causes monitor MN to display the work result information.

Welding unit 12 generates a control command for driving feed motor 20 of manipulator MC based on the parameter of the welding condition output from CPU 11, and transmits the control command to manipulator MC. Welding unit 12 also generates a control command for driving welding torch 21 of manipulator MC based on the parameter of the welding condition output from CPU 11, and transmits the control command to manipulator MC.

RAM 13A is, for example, a work memory used when the processing of CPU 11 is executed. Data generated or acquired by CPU 11 is temporarily stored in RAM 13A.

ROM 13B stores a program that defines processing of CPU 11. In the RAM, a program defining processing of CPU 11 is written in CPU 11 or welding unit 12ROM13B.

RAM 13A and ROM 13B store data of parameters of welding conditions, a teaching program of manipulator MC, a teaching program of positioner PST, and the like.

Drive unit 14 transmits various control commands to manipulator MC and drives each of the six arms included in manipulator MC. Specifically, drive unit 14 includes six servo control units (each of first servo control unit 141, second servo control unit 142, ..., and sixth servo control unit 146) that respectively drive the motors (for example, servo motors) of the six arms included in manipulator MC. Note that details of drive unit 14 will be described later.

External memory MM is configured using, for example, a universal serial bus (USB) memory, a secure digital memory (SD) (registered trademark) card, or the like. External memory MM is connected to teach pendant TP so as to be able to transmit and receive data to and from teach pendant TP, and records various kinds of information or data transmitted from teach pendant TP. External memory MM records, for example, information on teaching of manipulator MC, information on teaching of positioner PST, information on a work result for each teaching (for example, the work result information and the work result screen), and the like for each workpiece or each workpiece manufactured by welding.

Note that external memory MM may be configured using a hard disk drive or a solid state drive.

Manipulator MC includes feed motor 20, welding torch 21, and each of six arm control units (first arm control unit 230, second arm control unit 240, ..., sixth arm control unit 280). Note that illustration of each of the third arm control unit to the fifth arm control unit illustrated in Fig. 2 is omitted. The six arm control units will be described later.

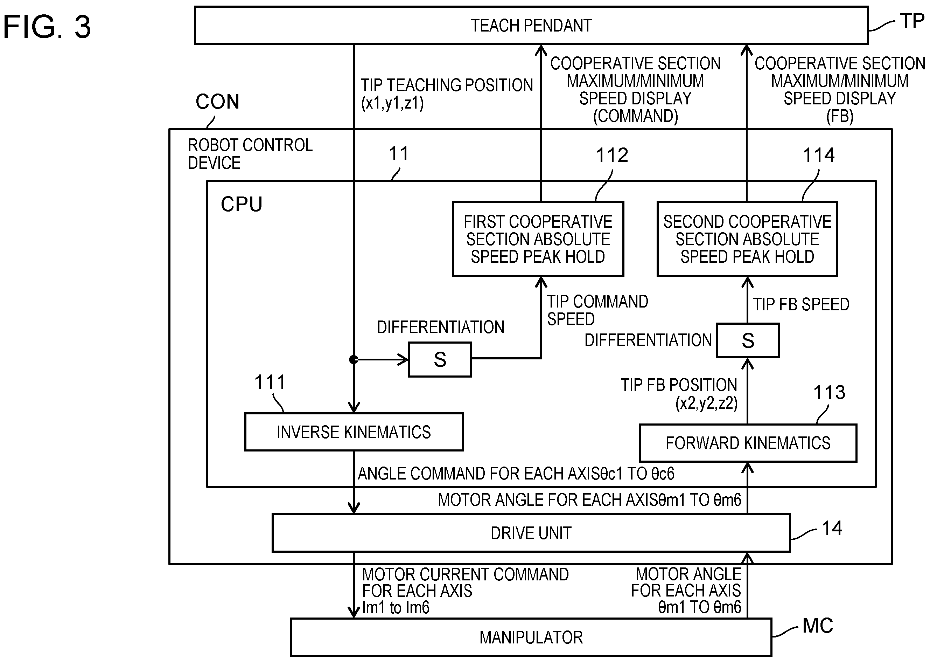

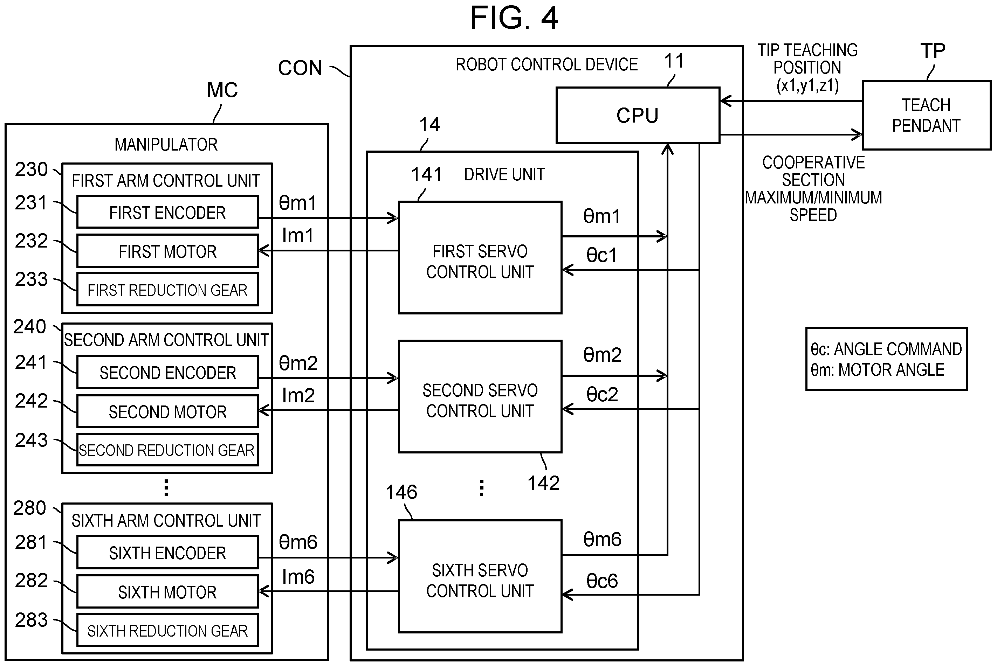

CPU 11 and drive unit 14 of robot control device CON and each of the six arm control units of manipulator MC will be described with reference to Figs. 3 and 4. Fig. 3 is a diagram for explaining various types of data (information) communicated among teach pendant TP, robot control device CON, and manipulator MC. Fig. 4 is a diagram illustrating an internal configuration example of drive unit 14 of robot control device CON and each arm control unit of manipulator MC.

Note that, in the description of Figs. 3 and 4, since each of first servo control unit 141 to sixth servo control unit 146 executes similar processing, only the processing executed by first servo control unit 141 will be described below, and the description of other servo control units will be omitted.

Similarly, in the description of Figs. 3 and 4, each of first arm control unit 230 to sixth arm control unit 280 executes similar processing. Therefore, in the following description, only processing executed by each unit (each of first encoder 231, first motor 232, and first reduction gear 233) of first arm control unit 230 and first arm control unit 230 will be described, and description of other arm control units will be omitted.

Inverse kinematics 111 acquires information of tip teaching position (x1, y1, z1) of welding torch 21 transmitted from teach pendant TP. Inverse kinematics 111 calculates an angle of each axis (joint) of the six arms for driving the current tip position of welding torch 21 to tip teaching position (x1, y1, z1) based on the current tip position of welding torch 21. Inverse kinematics 111 calculates axis angle θc1 of first axis J1 of the first arm, axis angles θc2, ... of second axis J2 of the second arm, and axis angle θc6 of sixth axis J6 of the sixth arm. Inverse kinematics 111 generates axis angle commands in which information of calculated axis angles θc1 to θc6 of the six arms is associated with control commands for driving the six arms, and outputs the generated axis angle commands to drive unit 14.

First cooperative section absolute speed peak hold 112 of CPU 11 differentiates the movement amount of the tip position of welding torch 21 based on the current tip position of welding torch 21 and tip teaching position (x1, y1, z1) of welding torch 21 transmitted from teach pendant TP with the movement time of welding torch 21. CPU 11 calculates a command speed (hereinafter, described as "tip command speed") of the tip of welding torch 21 based on the control by teach pendant TP by differential processing. CPU 11 outputs information on the calculated tip command speed of welding torch 21 to first cooperative section absolute speed peak hold 112.

First cooperative section absolute speed peak hold 112 determines whether or not the input tip command speed of welding torch 21 is a maximum value or a minimum value (that is, whether or not it is a peak). When it is determined that the tip command speed of welding torch 21 is the maximum value or the minimum value, first cooperative section absolute speed peak hold 112 records information of the tip command speed.

After completion of the welding work, first cooperative section absolute speed peak hold 112 generates work result information including information on the recorded tip command speed (that is, the absolute speed) and transmits the work result information to teach pendant TP.

Drive unit 14 acquires each axis angle command output from inverse kinematics 111. Drive unit 14 calculates a motor current value of each axis for driving current axis angles of the six arms to respective axis angles θc1 to θc6 on the basis of the acquired axis angle commands. Drive unit 14 generates a motor current command for each axis in which information of each of the converted motor current values Im1 to Im6 for each axis is associated with a control command for driving the motor for each axis, and transmits the motor current command to manipulator MC.

First servo control unit 141 acquires information of driven shaft angle θc1 output from inverse kinematics 111 of CPU 11. First servo control unit 141 calculates the drive amount of the first arm on the basis of the difference between the current axis angle of the first arm and acquired axis angle θc1, and calculates motor current value Im1 corresponding to the drive amount of the first arm. First servo control unit 141 transmits, to first motor 232, information of calculated motor current value Im1 and a control command for driving the first arm in association with each other.

First arm control unit 230 of manipulator MC drives first motor 232 with motor current value Im1 based on the control command transmitted from first servo control unit 141. First arm control unit 230 drives first reduction gear 233 to stop and control first motor 232. First encoder 231 transmits information on motor angle θm1(that is, the rotation angle) of first motor 232 to first servo control unit 141.

First servo control unit 141 outputs the information of motor angle θm1 of first motor 232 transmitted from first arm control unit 230 to forward kinematics 113.

Forward kinematics 113 acquires information of motor angles θm1 to θm6 of the motors (first motor 232 to sixth motor 282) of the six arms transmitted from first servo control unit 141 to sixth servo control unit 146, respectively. Forward kinematics 113 calculates the current tip position (hereinafter, described as a "tip feedback (FB) position") of welding torch 21 based on the information of respective motor angles θm1 to θm6 of the six arms.

CPU 11 differentiates the movement amount of the tip position of welding torch 21 based on the tip position of welding torch 21 before driving and the current tip FB position (x2, y2, z2) of welding torch 21 with the movement time of welding torch 21. CPU 11 calculates an actual speed (hereinafter, described as "tip FB speed") of the tip of welding torch 21 based on the control by teach pendant TP by differential processing. CPU 11 outputs information on the calculated tip FB speed of welding torch 21 to second cooperative section absolute speed peak hold 114.

Second cooperative section absolute speed peak hold 114 determines whether or not the input tip FB speed of welding torch 21 is a maximum value or a minimum value (that is, whether or not it is a peak). When it is determined that the tip FB speed of welding torch 21 is the maximum value or the minimum value, second cooperative section absolute speed peak hold 114 records information of the tip FB speed.

In addition, second cooperative section absolute speed peak hold 114 generates work result information including information on the recorded tip FB speed after the welding work by manipulator MC is completed, transmits the work result information to teach pendant TP, and displays the work result information on monitor MN.

The maximum speed or the minimum speed of welding torch 21 displayed on work result screen SC1 may be the tip command speed or the tip FB speed.

When work result screen SC1 including the tip command speed is displayed, welding system 100 can omit the actual operation of each of manipulator MC and positioner PST. In such a case, the maximum value or the minimum value of the tip FB speed presented on work result screen SC1 indicates the operation simulation result of each of manipulator MC and positioner PST based on the teaching program.

When work result screen SC1 including the tip FB speed is displayed, welding system 100 can present the maximum value or the minimum value of the tip FB speed during the actual operation of each of manipulator MC and positioner PST based on the teaching program. As a result, the user can determine whether or not there is a delay due to the follow-up control of each of manipulator MC and positioner PST based on the teaching program on the basis of difference between the tip command speed and the tip FB speed.

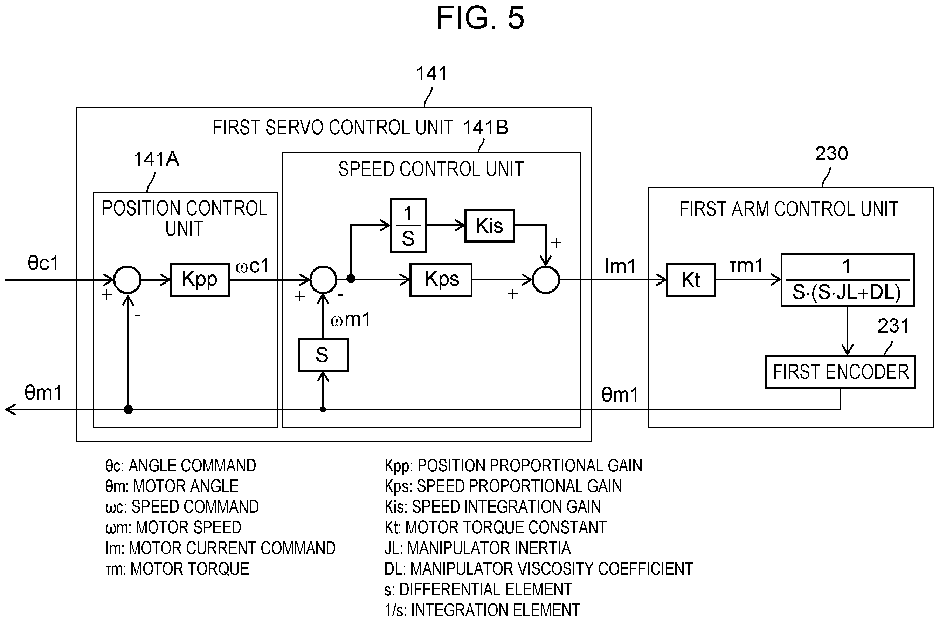

Next, a control signal transmitted between first servo control unit 141 and first arm control unit 230 will be described with reference to Fig. 5. Fig. 5 is a block diagram illustrating an example of control signals of first servo control unit 141 and first arm control unit 230. Note that, in Fig. 5, for easy understanding of description, a control signal transmitted between first servo control unit 141 and first arm control unit 230 will be described, and description of a control signal transmitted between another servo control unit and another arm control unit will be omitted.

First servo control unit 141 includes position control unit 141A capable of controlling the position of the first arm and speed control unit 141B capable of controlling the movement speed of the first arm.

Position control unit 141A receives inputs of the information (control signal) of driven axis angle θc1 output from inverse kinematics 111 and motor angle θm1 indicating the current position of the first arm output from first encoder 231. Position control unit 141A multiplies a difference (= θc1 - θm1) between axis angle θc1 and motor angle θm1 by position comparison gain Kpp, calculates a command angular speed ωc1 of first motor 232 for driving welding torch 21 to tip teaching position (x1, y1, z1), and outputs the command angular speed ωc1 to speed control unit 141B.

Speed control unit 141B receives the input of motor angle θm1 output from first encoder 231, differentiates motor angle θm1 by the movement time to the tip teaching position of welding torch 21, and calculates motor speed ωm1 of first motor 232. Speed control unit 141B further calculates a difference (= ωc1 - ωm1) between command angular speed ωc1 output from position control unit 141A and calculated motor speed ωm1 of first motor 232.

Speed control unit 141B calculates motor current value Im1 of first motor 232 by adding a value obtained by integrating the difference between command angular speed ωc1 and motor speed ωm1 with the movement time of welding torch 21 and multiplying the integrated value by speed integration gain Kis and a value obtained by multiplying the difference between command angular speed ωc1 and motor speed ωm1 by speed proportional gain Kps. Speed control unit 141B transmits information (control signal) of calculated motor current value Im1 of first motor 232 to first arm control unit 230.

First arm control unit 230 receives the input of the information of motor current value Im1 of first motor 232 output from speed control unit 141B, and calculates motor torque τm1 of first motor 232 by multiplying motor current value Im1 by motor torque constant Kt of first motor 232.

First arm control unit 230 drives first motor 232 at acceleration α1 corresponding to calculated motor torque τm1 of first motor 232.

Here, motor torque τm1 is a value obtained by multiplying motor torque constant Kt by motor current value Im1 of first motor 232 (τm1 = Kt × Im1). Therefore, first arm control unit 230 can acquire acceleration α1 of first motor 232 by dividing motor torque τm1 by inertia JL of manipulator MC (α1 = τm1/JL).

First encoder 231 detects a rotation angle (that is, the movement amount of the first arm) of first motor 232 driven by first arm control unit 230. The rotation angle of first motor 232 detected by first encoder 231 is a rotation angle corresponding to a control signal obtained by multiplying a transfer function (= 1/(S·S (JL + DL))) and motor torque τm1 of first motor 232. Coefficient DL indicates the viscosity coefficient of manipulator MC.

First encoder 231 transmits information on motor angle θm1 of first motor 232 to first servo control unit 141.

As described above, manipulator MC can move the tip position of welding torch 21 to tip teaching position (x1, y1, z1) by driving each of the six arms on the basis of the information of tip teaching position (x1, y1, z1) of welding torch 21 transmitted from teach pendant TP.

Although the example of acquiring the absolute speed (tip FB speed) information of welding torch 21 of manipulator MC has been described with reference to each of Figs. 3 to 5, the absolute speed information of workpiece fixing table STG of positioner PST is acquired by the similar processing. Hereinafter, an outline of a method of calculating the absolute speed of workpiece fixing table STG will be described.

Robot control device CON generates a motor current command based on the information on the teaching position of workpiece fixing table STG transmitted from teach pendant TP, and transmits the motor current command to positioner PST.

Positioner PST rotates a motor (not illustrated) that can rotate workpiece fixing table STG in a predetermined rotation direction (rotation direction PV or direction opposite to rotation direction PV) based on the motor current command transmitted from robot control device CON. Positioner PST acquires information of a motor angle (that is, the rotation angle of workpiece fixing table STG) of the motor by an encoder (not illustrated) and transmits the information to robot control device CON.

Robot control device CON calculates a current rotation position of workpiece fixing table STG based on the motor angle information transmitted from positioner PST. Robot control device CON differentiates the rotation amount (that is, the movement amount) of workpiece fixing table STG based on the rotation position of workpiece fixing table STG before rotation and the current rotation position of workpiece fixing table STG with the rotation time (that is, the movement time) of workpiece fixing table STG, and calculates the absolute speed of workpiece fixing table STG based on the control by teach pendant TP. As described above, robot control device CON can acquire the absolute speed of workpiece fixing table STG of positioner PST.

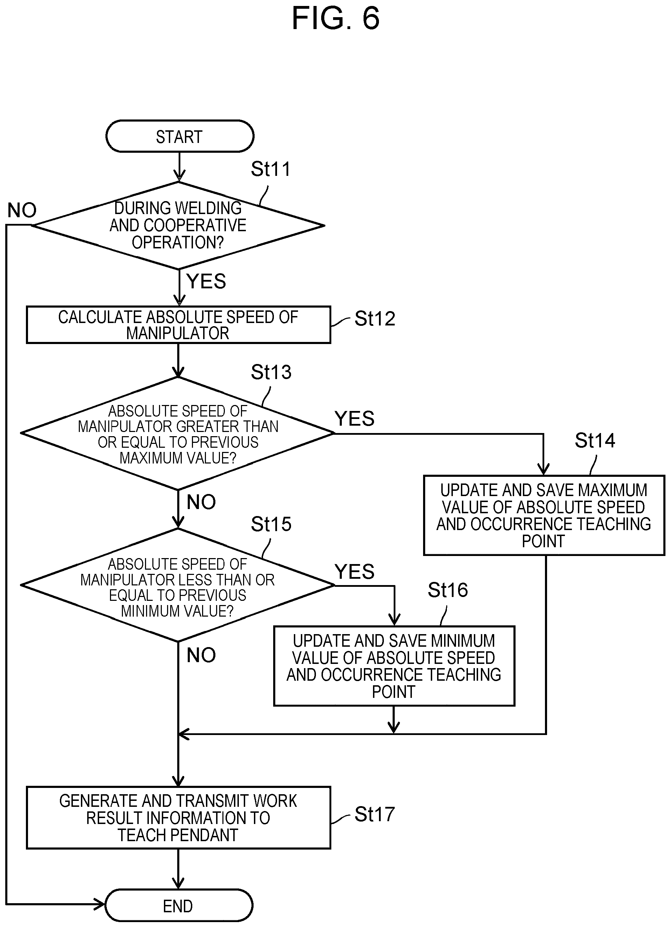

Next, generation of work result information on manipulator MC by robot control device CON according to the exemplary embodiment will be described with reference to Fig. 6. Fig. 6 is a flowchart illustrating a first operation procedure example of robot control device CON according to the exemplary embodiment. The first operation procedure here is an operation procedure for generating work result information on the absolute speed of manipulator MC.

Robot control device CON determines whether or not the welding is being performed and manipulator MC and positioner PST are performing the cooperative operation under the control of manipulator MC or positioner PST (St11).

If robot control device CON determines that the welding is being performed and manipulator MC and positioner PST are performing the cooperative operation in the processing of step St11 (St11, YES), robot control device CON calculates the absolute speed (movement speed) of welding torch 21 of manipulator MC based on the information on the tip FB speed transmitted from manipulator MC during the cooperative operation (St12).

Here, a method of calculating the absolute speed of manipulator MC will be described. Robot control device CON calculates the movement amount of manipulator MC based on the information on the tip FB speed transmitted from manipulator MC during the cooperative operation. Robot control device CON calculates the movement amount (rotation amount) of workpiece fixing table STG of positioner PST based on the absolute speed of workpiece fixing table STG transmitted from positioner PST during the cooperative operation.

Robot control device CON calculates a relative movement amount between manipulator MC and positioner PST based on a difference between the calculated movement amount of manipulator MC and the movement amount of positioner PST (relative movement amount = movement amount of manipulator MC - movement amount of positioner PST).

Robot control device CON divides the calculated relative movement amount by the operation speed (that is, the relative speed of manipulator MC with respect to positioner PST) of manipulator MC taught to manipulator MC to calculate the movement time of manipulator MC (movement time = relative movement amount/relative speed of manipulator MC). Robot control device CON divides the movement amount of manipulator MC by the movement time of manipulator MC to acquire the absolute speed of manipulator MC (absolute speed of manipulator MC = movement amount of manipulator MC/movement time of manipulator MC).

On the other hand, when robot control device CON determines that the welding is being performed and manipulator MC and positioner PST are not performing the cooperative operation in the processing of step St11 (St11, NO), robot control device CON ends the operation procedure illustrated in Fig. 6. When robot control device CON determines that manipulator MC and positioner PST are being welded and manipulator MC and positioner PST are not performing the cooperative operation in the processing of step St11, robot control device CON may return to the processing of step St11 again.

Robot control device CON determines whether or not the latest absolute speed (tip FB speed) of manipulator MC acquired by the calculation is equal to or higher than the absolute speed (hereinafter, expressed as "previous maximum value") at which the latest absolute speed is determined to be the maximum value among the absolute speeds calculated during welding of the same workpiece (St13).

When determining that the latest absolute speed of manipulator MC is greater than or equal to the previous maximum value in the processing of step St13 (St13, YES), robot control device CON calculates the maximum value of the latest absolute speed and the occurrence teaching point at which the maximum value of the latest absolute speed is calculated. Robot control device CON records (saves) the maximum value of the calculated latest absolute speed (tip FB speed) and the occurrence teaching point in ROM 13B as the maximum value of the absolute speed of manipulator MC and the occurrence teaching point in the cooperative operation section (St14).

When the maximum value of the absolute speed of manipulator MC and the occurrence teaching point in the cooperative operation section have already been recorded in ROM 13B, robot control device CON overwrites (updates) and records (saves) the maximum value of the absolute speed of manipulator MC and the occurrence teaching point.

On the other hand, when determining that the latest absolute speed of manipulator MC is not greater than or equal to the previous maximum value in the processing of step St13 (St13, NO), robot control device CON determines whether or not the latest absolute speed (tip FB speed) of manipulator MC acquired by the calculation is less than or equal to the absolute speed (hereinafter, expressed as "previous minimum value") at which the latest absolute speed is determined to be the minimum value among the absolute speeds calculated during welding of the same workpiece (St15).

When determining that the latest absolute speed (tip FB speed) of manipulator MC is less than or equal to the previous minimum value in the processing of step St15 (St15, YES), robot control device CON calculates the minimum value of the latest absolute speed and the occurrence teaching point at which the minimum value of the latest absolute speed is calculated. Robot control device CON records (saves) the minimum value of the calculated latest absolute speed and the occurrence teaching point in ROM 13B as the minimum value of the absolute speed of manipulator MC and the occurrence teaching point in the cooperative operation section.

On the other hand, when robot control device CON determines that the latest absolute speed (tip FB speed) of manipulator MC is not equal to or less than the previous minimum value in the processing of step St15 (St15, NO), robot control device CON proceeds to the processing of step St17.

Robot control device CON generates the work result information based on the maximum value of the absolute speed (tip FB speed) of manipulator MC and the occurrence teaching point or the minimum value of the absolute speed (tip FB speed) of manipulator MC and the occurrence teaching point in the cooperative operation section recorded (saved) in ROM 13B. When calculating that the absolute speed of manipulator MC is substantially constant, robot control device CON may generate the work result information based on the absolute speed calculated to be substantially constant. Robot control device CON transmits the generated work result information to teach pendant TP (St17).

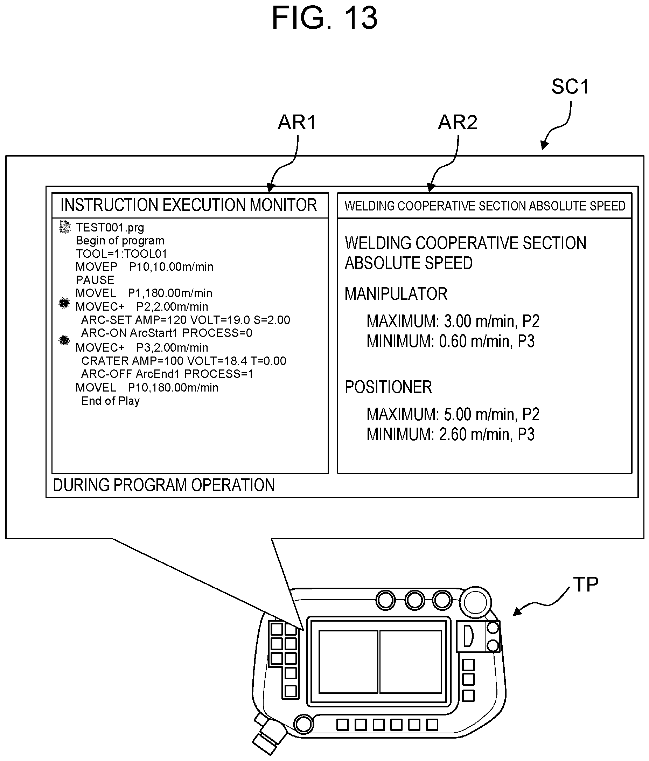

Teach pendant TP generates work result screen SC1 (see Fig. 13) on the basis of the work result information of each of manipulator MC and positioner PST transmitted from robot control device CON, and displays work result screen SC1 on monitor MN.

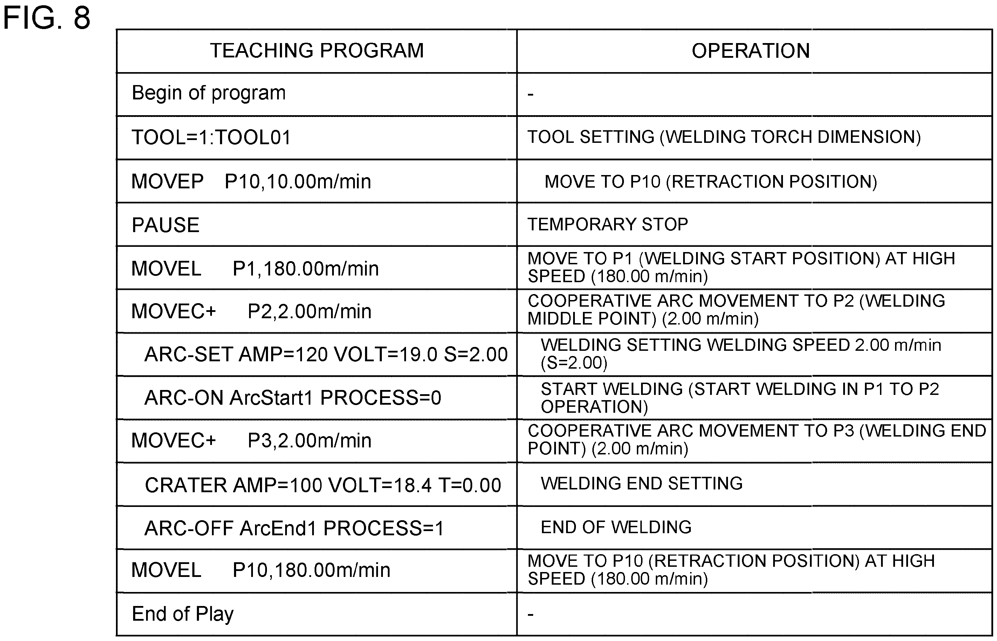

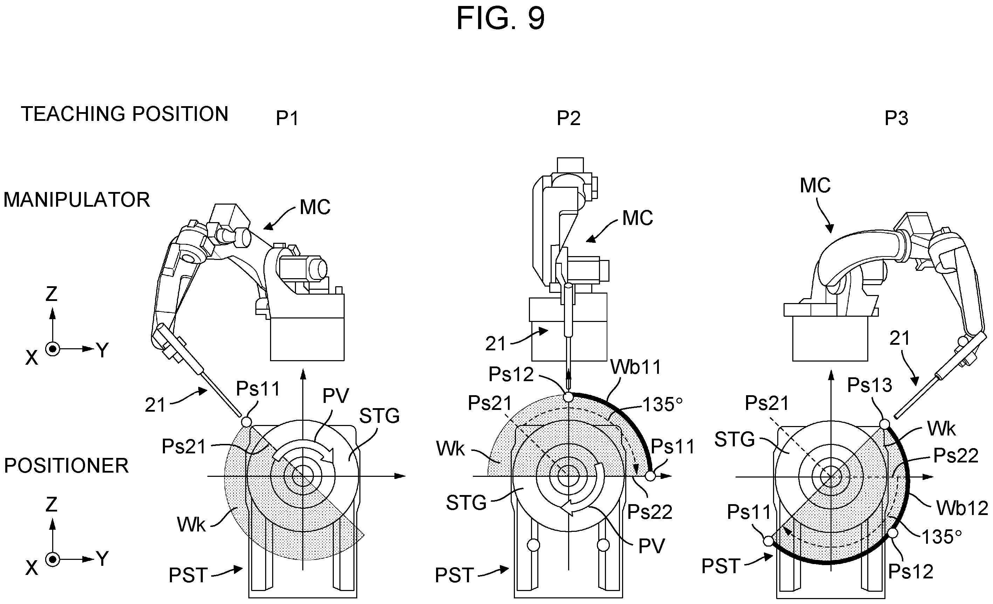

Robot control device CON may start the processing of step St11 at the welding start timing, execute the processing of step St17 at the timing when it is determined that the welding position by welding torch 21 has reached a plurality of teaching points (for example, welding start position P1, welding middle point P2, welding end position P3, and the like illustrated in Fig. 8) set for one welding section, and generate the work result information for each teaching section between the teaching points. The teaching section here is, for example, a section from welding start position P1 to welding middle point P2, a section from welding middle point P2 to welding end position P3, and the like illustrated in Fig. 9. Each teaching section described below is a cooperative operation section as an example.

In addition, robot control device CON may start the processing of step St11 at the welding start timing, repeatedly execute the operation procedure illustrated in Fig. 6 until the welding end timing, execute the processing of step St17 after the welding end, and generate the work result information for each welding section.

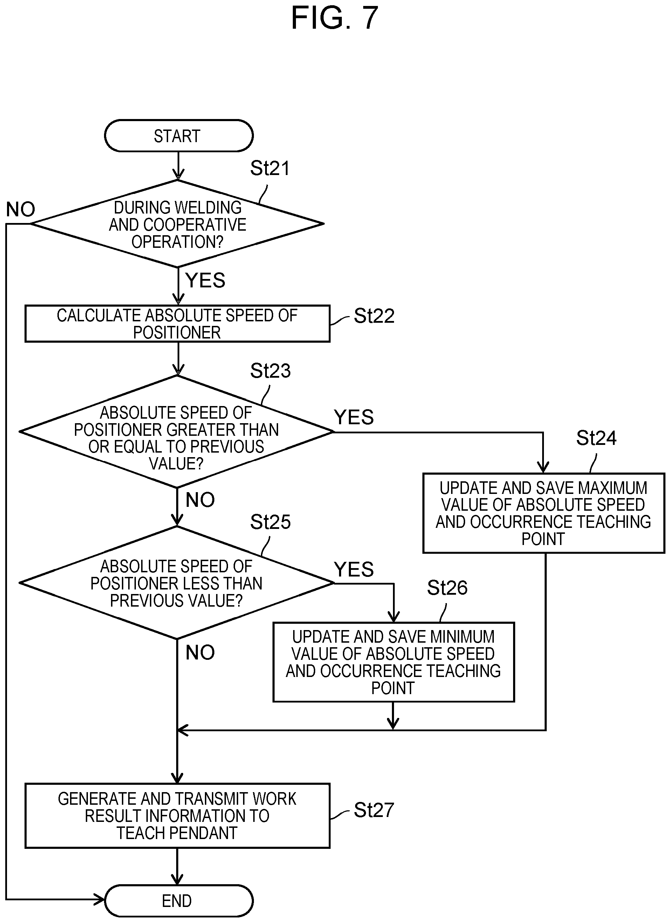

Next, generation of work result information of positioner PST by robot control device CON according to the exemplary embodiment will be described with reference to Fig. 7. Fig. 7 is a flowchart illustrating a second operation procedure example of robot control device CON according to the exemplary embodiment. The second operation procedure here is an operation procedure for generating the work result information on the absolute speed of positioner PST.

Robot control device CON determines whether or not the welding is being performed and positioner PST and manipulator MC are performing the cooperative operation under the control of positioner PST or manipulator MC (St21).

When robot control device CON determines that the welding is being performed and positioner PST and manipulator MC are performing the cooperative operation in the processing of step St21 (St21, YES), robot control device CON calculates the absolute speed of positioner PST based on the information on the motor angle of positioner PST during the cooperative operation (St22).

Here, a method of calculating the absolute speed of positioner PST will be described. Robot control device CON calculates the movement amount of manipulator MC based on the information of the absolute speed (tip FB speed) transmitted from manipulator MC during the cooperative operation. Robot control device CON calculates the movement amount of positioner PST based on the rotation amount (movement amount) of workpiece fixing table STG of positioner PST.

Robot control device CON calculates a relative movement amount between manipulator MC and positioner PST based on a difference between the calculated movement amount of manipulator MC and the movement amount of positioner PST.

Robot control device CON divides the calculated relative movement amount by the operation speed (that is, the relative speed of positioner PST with respect to manipulator MC) of positioner PST taught to positioner PST, and calculates the movement time of positioner PST (movement time = relative movement amount/relative speed of positioner PST). Robot control device CON divides the movement amount of positioner PST by the movement time of positioner PST to acquire the absolute speed of positioner PST (absolute speed of positioner PST = movement amount of positioner PST/movement time of positioner PST).

On the other hand, when robot control device CON determines that the welding is being performed and positioner PST and manipulator MC are not performing the cooperative operation in the processing of step St21 (St21, NO), robot control device CON ends the operation procedure illustrated in Fig. 7. When robot control device CON determines that positioner PST and manipulator MC are performing the welding and positioner PST and manipulator MC are not performing the cooperative operation in the processing of step St21, robot control device CON may return to the processing of step St21 again.

Robot control device CON determines whether or not the latest absolute speed of positioner PST acquired by the calculation is greater than or equal to the previous maximum value (St23).

When determining that the latest absolute speed of positioner PST is greater than or equal to the previous maximum value in the processing of step St23 (St23, YES), robot control device CON calculates the maximum value of the latest absolute speed and the occurrence teaching point at which the maximum value of the latest absolute speed is calculated. Robot control device CON records (saves) the maximum value of the calculated latest absolute speed and the occurrence teaching point in ROM 13B as the maximum value of the absolute speed of positioner PST and the occurrence teaching point in the cooperative operation section (St24).

When the maximum value of the absolute speed of positioner PST and the occurrence teaching point in the cooperative operation section have been recorded in ROM 13B, robot control device CON overwrites (updates) and records (saves) the maximum value of the absolute speed of positioner PST and the occurrence teaching point.

On the other hand, when determining that the latest absolute speed of positioner PST is not greater than or equal to the previous maximum value in the processing of step St23 (St23, NO), robot control device CON determines whether or not the latest absolute speed of positioner PST acquired by the calculation is less than or equal to the previous minimum value (St25).

When determining that the latest absolute speed of positioner PST is less than or equal to the previous minimum value in the processing of step St25 (St25, YES), robot control device CON calculates the minimum value of the latest absolute speed and the occurrence teaching point at which the minimum value of the latest absolute speed is calculated. Robot control device CON records (saves) the calculated minimum value of the latest absolute speed and the occurrence teaching point in ROM 13B as the minimum value of the absolute speed of positioner PST and the occurrence teaching point in the cooperative operation section.

On the other hand, when determining that the latest absolute speed of positioner PST is not equal to or less than the previous minimum value in the processing of step St25 (St25, NO), robot control device CON proceeds to the processing of step St27.

Robot control device CON generates the work result information based on the maximum value of the absolute speed of positioner PST and the occurrence teaching point in the cooperative operation section recorded (saved) in ROM 13B or the minimum value of the absolute speed of positioner PST and the occurrence teaching point. When calculating that the absolute speed of positioner PST is substantially constant, robot control device CON may generate the work result information based on the absolute speed calculated to be substantially constant. Robot control device CON transmits the generated work result information to teach pendant TP (St27).

Teach pendant TP generates work result screen SC1 (see Fig. 13) on the basis of the work result information of each of manipulator MC and positioner PST transmitted from robot control device CON, and displays work result screen SC1 on monitor MN.

Robot control device CON may start the processing of step St21 at the welding start timing, execute the processing of step St27 at the timing when it is determined that the holding attitude of the workpiece fixedly held on positioner PST has reached a plurality of teaching points (for example, welding start position P1, welding middle point P2, welding end position P3, and the like illustrated in Fig. 8) set for one welding section, and generate the work result information for each teaching section between the teaching points. The teaching section here is, for example, a section from welding start position P1 to welding middle point P2, a section from welding middle point P2 to welding end position P3, and the like illustrated in Fig. 9.

In addition, robot control device CON may start the processing of step St21 at the welding start timing, repeatedly execute the operation procedure illustrated in Fig. 7 until the welding end timing, execute the processing of step St27 after the welding end, and generate the work result information for each welding section.

As described above, in welding system 100 according to the present exemplary embodiment, robot control device CON can generate the work result information including the maximum value or the minimum value of the absolute speeds of manipulator MC and positioner PST and the occurrence teaching point of the maximum value or the minimum value of the absolute speed, generate work result screen SC1 based on the work result information, and display work result screen SC1 on teach pendant TP. As a result, welding system 100 can present the absolute speeds of manipulator MC and positioner PST during the welding and during the cooperative operation to the worker.

Thus, the worker can determine whether or not there is a following delay of manipulator MC or positioner PST, deterioration of the locus system, or the like based on work result screen SC1, and can correct the teaching content performed on manipulator MC or positioner PST. Therefore, welding system 100 according to the present exemplary embodiment can assist correction of the teaching of manipulator MC or positioner PST performed by the worker.

Next, a teaching program and operations of manipulator MC and positioner PST based on the teaching program will be described with reference to Fig. 8. Fig. 8 is a diagram illustrating an example of the teaching program and an operation example of manipulator MC and positioner PST. In the description after Fig. 8, workpiece Wk has a semicircular shape having a diameter of 400 mm as an example.

Robot control device CON controls each of manipulator MC and positioner PST based on a teaching program "Begin of program" of manipulator MC and positioner PST, and starts the welding work of welding workpiece Wk.

Robot control device CON executes tool setting of manipulator MC (setting of dimensional information of welding torch 21) based on the teaching program "TOOL = 1 : TOOL01". Robot control device CON controls manipulator MC based on teaching program "MOVEP P10, 10.00 m/min" to move welding torch 21 of manipulator MC to retraction position P10, and then temporarily stops manipulator MC based on teaching program "PAUSE".

Robot control device CON controls each of manipulator MC and positioner PST to move welding torch 21 of manipulator MC and the rotation angle of positioner PST fixedly holding workpiece Wk to welding start position P1 based on teaching program "MOVEL P1, 180.00m/min", and linearly moves welding torch 21 of manipulator MC and the rotation angle of positioner PST fixedly holding the workpiece at a high speed at 180.00 m/min toward welding start position P1.

After moving welding torch 21 of manipulator MC and the rotation angle of positioner PST to welding start position P1, robot control device CON cooperatively controls each of manipulator MC and positioner PST based on teaching program "MOVEC + P2, 2.00 m/min". Robot control device CON causes manipulator MC to execute control of moving welding torch 21 at a relative speed of 2.00 m/min from welding start position P1 along the arc shape of workpiece Wk toward welding middle point P2, and causes positioner PST to execute control of moving workpiece Wk in rotation direction PV at a relative speed of 2.00 m/min.

After moving welding torch 21 of manipulator MC and the rotation angle of positioner PST to welding start position P1, robot control device CON cooperatively controls each of manipulator MC and positioner PST based on teaching programs "MOVEC + P2, 2.00 m/min", "ARC-SET AMP = 120 VOLT = 19.0 S = 2.00", and "ARC-ON ArcStart1 PROCESS = 0". Robot control device CON causes manipulator MC to start welding at welding start position P1 and execute control of welding workpiece Wk to welding middle point P2 while moving welding torch 21 at a relative speed (welding speed) of 2.00 m/min from welding start position P1 along the arc shape of workpiece Wk toward welding middle point P2 and causes positioner PST to execute control of moving workpiece Wk in rotation direction PV at a relative speed of 2.00 m/min.

After the welding to welding middle point P2 is completed, robot control device CON cooperatively controls each of manipulator MC and positioner PST based on teaching programs "MOVEC + P3, 2.00 m/min", "CRATER AMP = 100 VOLT = 18.4 T = 0.00", and "ARC-OFF ArcEnd1 PROCESS = 1". Robot control device CON causes manipulator MC to continue welding, and execute control of welding workpiece Wk to welding end position P3 while moving welding torch 21 at a relative speed (welding speed) of 2.00 m/min from welding middle point P2 along the arc shape of workpiece Wk toward welding end position P3, and causes positioner PST to execute control of moving workpiece Wk in rotation direction PV at a relative speed of 2.00 m/min. After the welding to welding end position P3 is completed, robot control device CON causes manipulator MC to execute control of turning off the output of welding torch 21 of manipulator MC to end the welding, and causes positioner PST to execute control of stopping the movement of workpiece Wk.

Robot control device CON controls manipulator MC based on teaching program "MOVEL P10, 180.00m/min" to linearly move welding torch 21 of manipulator MC to retraction position P10 at a high speed of 180.00 m/min.

Robot control device CON ends the control of each of manipulator MC and positioner PST based on teaching program "End of Play" of manipulator MC and positioner PST, and ends the welding work to workpiece Wk.

An operation example in normal cooperation of manipulator MC and positioner PST based on the teaching program illustrated in Fig. 8 will be described with reference to Figs. 9 and 10. Fig. 9 is a diagram illustrating an operation example of manipulator MC and positioner PST in normal cooperation. Fig. 10 is work result table TB 1 illustrating calculation results of the movement amount and the absolute speed of manipulator MC and positioner PST in normal cooperation.

Work result table TB1 illustrated in Fig. 10 is a table illustrating calculation results of the movement amounts and the absolute speeds of manipulator MC and positioner PST, the relative speeds and the relative movement amounts between manipulator MC and positioner PST, and the movement times of manipulator MC and positioner PST in each cooperative operation section.

At teaching position "welding start position P1", manipulator MC is controlled by robot control device CON to move the tip of welding torch 21 to one end position Ps11 of the circumference of workpiece Wk having a semicircular shape, and then temporarily stops. Each of manipulator MC and positioner PST is cooperatively controlled by robot control device CON.

At teaching position "welding middle point P2", manipulator MC is in a state where the tip of welding torch 21 is located at position Ps12 on the circumference of workpiece Wk having a semicircular shape, and weld bead Wb11 is formed on workpiece Wk. At teaching position "welding middle point P2", positioner PST is in a state where workpiece Wk (workpiece fixing table STG) is rotated by 135° from position Ps21 corresponding to teaching position "welding start position P1" to position Ps22 in rotation direction PV with the X axis as a rotation center.

In the cooperative operation section from teaching position "welding start position P1" to teaching position "welding middle point P2", the movement time of manipulator MC and positioner PST is 9.42 s. The relative movement amount between manipulator MC and positioner PST is 90°. The relative speed between manipulator MC and positioner PST is 2.00 m/min. In manipulator MC, the movement amount of welding torch 21 about the X axis in the coordinate system of positioner PST is 45°, and the absolute speed of welding torch 21 during welding is 1.00 m/min. In positioner PST, the movement amount of workpiece Wk about the X axis is 135°, and the absolute speed at which workpiece Wk (workpiece fixing table STG) is rotated is 3.00 m/min.

At teaching position "welding end position P3", manipulator MC is in a state where the tip of welding torch 21 is located at position Ps13 on the circumference of workpiece Wk having a semicircular shape, and weld bead Wb12 is formed on workpiece Wk. At teaching position "welding end position P3", positioner PST is in a state where workpiece Wk (workpiece fixing table STG) is rotated by 135° from position Ps22 corresponding to teaching position "welding middle point P2" to position Ps23 in rotation direction PV with the X axis as the rotation center.

In the cooperative operation section from teaching position "welding middle point P2" to teaching position "welding end position P3", the movement time of manipulator MC and positioner PST is 9.42 s. The relative movement amount between manipulator MC and positioner PST is 90°. The relative speed between manipulator MC and positioner PST is 2.00 m/min. In manipulator MC, the movement amount of welding torch 21 about the X axis in the coordinate system of positioner PST is 45°, and the absolute speed of welding torch 21 during welding is 1.00 m/min. In positioner PST, the movement amount of workpiece Wk (workpiece fixing table STG) about the X axis is 135°, and the absolute speed at which workpiece Wk (workpiece fixing table STG) is rotated is 3.00 m/min.

Therefore, the relative speed between manipulator MC and positioner PST is the same as the relative speed of 2.00 m/min based on teaching program "MOVEC + P2, 2.00 m/min" corresponding to the cooperative operation section from teaching position" welding start position P1" to teaching position "welding middle point P2". That is, manipulator MC and positioner PST in the cooperative operation section from teaching position "welding start position P1" to teaching position "welding middle point P2" operate normally without following delay and deterioration of locus accuracy.

The relative speed between manipulator MC and positioner PST is the same as the relative speed of 2.00 m/min based on teaching program "MOVEC + P3, 2.00 m/min" corresponding to the cooperative operation section from teaching position "welding middle point P2" to teaching position "welding end position P3". That is, manipulator MC and positioner PST in the cooperative operation section from teaching position "welding middle point P2" to teaching position "welding end position P3" operate normally without following delay and deterioration of locus accuracy.

Furthermore, in the example illustrated in Figs. 9 and 10, the movement amount of manipulator MC in each of the cooperative operation sections "P1 to P2" and "P2 to P3" is the same. Similarly, the movement amount of positioner PST in each of the cooperative operation sections "P1 to P2" and "P2 to P3" is the same. Therefore, in the examples illustrated in Figs. 9 and 10, it can be seen that each of manipulator MC and positioner PST executes the cooperative operation in a well-balanced manner in each cooperative section.

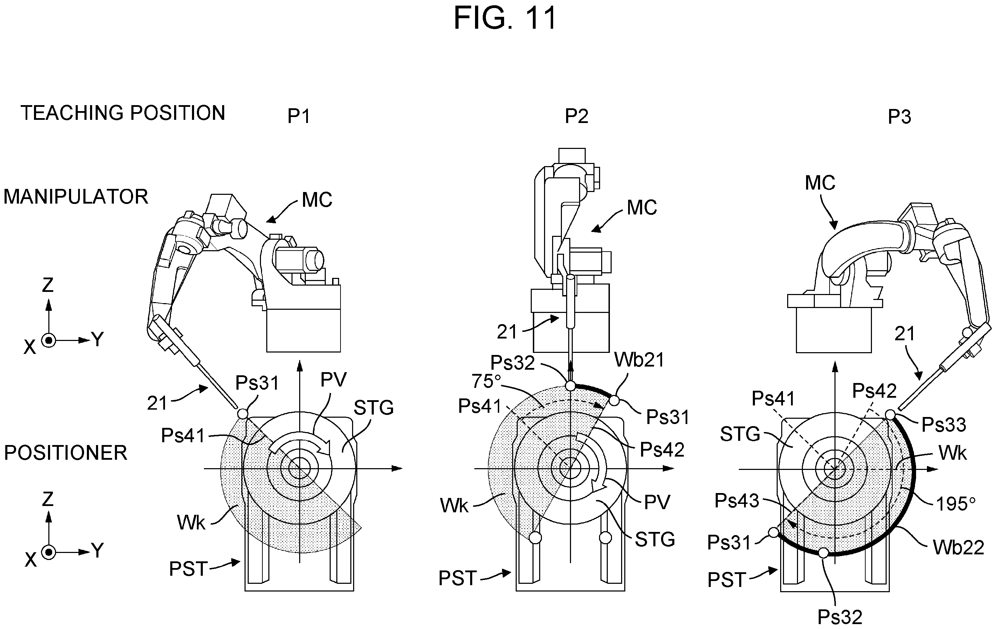

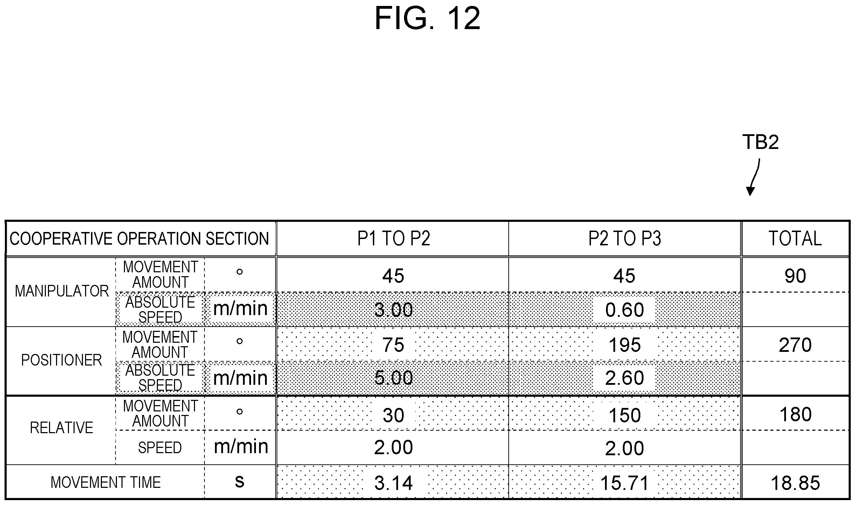

An example of the operation of manipulator MC and positioner PST in abnormal cooperation based on the teaching program illustrated in Fig. 8 will be described with reference to Figs. 11 and 12. Fig. 11 is a diagram illustrating an operation example in abnormal cooperation of manipulator MC and positioner PST. Fig. 12 is work result table TB2 illustrating calculation results of the movement amount and the absolute speed of manipulator MC and positioner PST in abnormal cooperation.

Work result table TB2 illustrated in Fig. 11 is a table illustrating calculation results of the movement amounts and the absolute speeds of manipulator MC and positioner PST, the relative speeds and the relative movement amounts between manipulator MC and positioner PST, and the movement times of manipulator MC and positioner PST in each cooperative operation section.

At teaching position "welding start position P1", manipulator MC is controlled by robot control device CON to move the tip of welding torch 21 to one end position Ps11 of the circumference of workpiece Wk having a semicircular shape, and then temporarily stops. Each of manipulator MC and positioner PST is cooperatively controlled by robot control device CON.

At teaching position "welding middle point P2", manipulator MC is in a state where the tip of welding torch 21 is located at position Ps32 on the circumference of workpiece Wk having a semicircular shape, and weld bead Wb21 is formed on workpiece Wk. At teaching position "welding middle point P2", positioner PST is in a state where workpiece Wk (workpiece fixing table STG) is rotated by 75° from position Ps41 corresponding to teaching position "welding start position P1" to position Ps42 in rotation direction PV with the X axis as the rotation center.

In the cooperative operation section from teaching position "welding start position P1" to teaching position "welding middle point P2", the movement time of manipulator MC and positioner PST is 3.14 s. The relative movement amount between manipulator MC and positioner PST is 30°. The relative speed between manipulator MC and positioner PST is 2.00 m/min. In manipulator MC, the movement amount of welding torch 21 about the X axis in the coordinate system of positioner PST is 45°, and the absolute speed of welding torch 21 during welding is 3.00 m/min. In positioner PST, the movement amount of workpiece Wk (workpiece fixing table STG) about the X axis is 75°, and the absolute speed at which workpiece Wk is rotated is 5.00 m/min.

At teaching position "welding end position P3", manipulator MC is in a state where the tip of welding torch 21 is located at position Ps33 on the circumference of workpiece Wk having a semicircular shape, and weld bead Wb22 is formed on workpiece Wk. At teaching position "welding end position P3", positioner PST is in a state where workpiece Wk (workpiece fixing table STG) is rotated by 135° from position Ps22 corresponding to teaching position "welding middle point P2" to position Ps23 in rotation direction PV with the X axis as the rotation center.

In the cooperative operation section from teaching position "welding middle point P2" to teaching position "welding end position P3", the movement time of manipulator MC and positioner PST is 15.71 s. The relative movement amount between manipulator MC and positioner PST is 150°. The relative speed between manipulator MC and positioner PST is 2.00 m/min. In manipulator MC, the movement amount of welding torch 21 about the X axis in the coordinate system of positioner PST is 45°, and the absolute speed of welding torch 21 during welding is 0.60 m/min. In positioner PST, the movement amount of workpiece Wk (workpiece fixing table STG) about the X axis is 195°, and the absolute speed at which workpiece Wk (workpiece fixing table STG) is rotated is 2.60 m/min.

That is, the relative speed between manipulator MC and positioner PST is the same as the relative speed of 2.00 m/min based on teaching program "MOVEC + P2, 2.00 m/min" corresponding to the cooperative operation section "P1 to P2" from teaching position "welding start position P1" to teaching position "welding middle point P2". The relative speed between manipulator MC and positioner PST is the same as the relative speed of 2.00 m/min based on teaching program "MOVEC + P3, 2.00 m/min" corresponding to the cooperative operation section from teaching position "welding middle point P2" to teaching position "welding end position P3".

However, the absolute speed of manipulator MC changes from 3.00 m/min to 0.60 m/min in cooperative operation section "P1 to P2" and cooperative operation section "P2 to P3". The absolute speed of positioner PST changes from 5.00 m/min to 2.60 m/min in cooperative operation section "P1 to P2" and cooperative operation section "P2 to P3", and the movement amount of positioner PST changes from 75° to 195°.

Therefore, in the cooperative operation of each of manipulator MC and positioner PST illustrated in Figs. 11 and 12, the absolute speed and the movement amount are changed in each cooperative section as compared with the cooperative operation of each of manipulator MC and positioner PST illustrated in Figs. 9 and 10, and it can be seen that the cooperative operation is executed in an unbalanced state. As described above, when the cooperative operation of each of manipulator MC and positioner PST is unbalanced or the absolute speed is too high, the quality (that is, welding quality) of the weld bead formed on workpiece Wk may be deteriorated.

Work result screen SC1 will be described with reference to Fig. 13. Fig. 13 is a diagram illustrating an example of work result screen SC1 of manipulator MC and positioner PST.

As an example, work result screen SC1 includes instruction execution monitor AR1 that is an area for displaying a teaching program based on teaching by the worker, and area AR2 for displaying work result information of each of manipulator MC and positioner PST. Thus, the operator can compare the teaching program with the work result.

Area AR2 includes the absolute speed of each of the cooperative operation sections (welding cooperative sections) of manipulator MC and positioner PST. For example, work result screen SC1 indicates that the maximum value of the absolute speed of manipulator MC is "3.00 m/min" in cooperative operation section "P2", and the maximum value of the absolute speed is "0.60 m/min" in cooperative operation section "P3". Further, work result screen SC1 indicates that the maximum value of the absolute speed is "5.00 m/min" in cooperative operation section "P2" of positioner PST, and the maximum value of the absolute speed is "2.60 m/min" in cooperative operation section "P3".

If only the relative speeds of manipulator MC and positioner PST are known, it is difficult for the worker to understand the reason for the deterioration of the welding quality or to understand the teaching portion to be corrected. However, welding system 100 according to the exemplary embodiment calculates that the absolute speed of manipulator MC has the maximum value of "3.00 m/min" in the cooperative operation section "P1 to P2", and the minimum value of "0.60 m/min" in the cooperative operation section "P2 to P3", and the absolute speed of positioner PST has the maximum value of "5.00 m/min" in the cooperative operation section "P1 to P2", and the minimum value of "2.60 m/min" in the cooperative operation section "P2 to P3", and displays the calculated values on teach pendant TP.

Therefore, as a result of the teaching shown in Fig. 8, the worker can understand that the welding speed of manipulator MC changes between the cooperative operation section "P1 to P2" and the cooperative operation section "P2 to P3". Based on that the absolute speed of positioner PST has "5.00 m/min", the worker can understand that the following delay of positioner PST, the vibration due to the driving of the motor, and the like may occur in the cooperative operation section "P2 to P3".

As described above, welding system 100 according to the exemplary embodiment calculates the absolute speed of each of manipulator MC and positioner PST and displays the calculated absolute speed on teach pendant TP, thereby assisting the correction of the teaching performed by the worker. Further, the worker can more efficiently and effectively correct the teaching based on the absolute speed of each of manipulator MC and positioner PST.

As described above, welding system 100 (an example of a welding robot system) according to the exemplary embodiment is welding system 100 including manipulator MC that performs welding on workpiece Wk, positioner PST (an example of a workpiece holding device) that holds workpiece Wk, and robot control device CON (an example of a control device) connected to manipulator MC and positioner PST. Robot control device CON acquires the teaching related to manipulator MC and positioner PST, controls manipulator MC and positioner PST to perform the cooperative operation based on the teaching, and calculates and outputs the absolute speed of manipulator MC during the cooperative operation and the absolute speed of positioner PST during the cooperative operation.

As a result, since welding system 100 according to the exemplary embodiment can output the absolute speed of each of manipulator MC and positioner PST during the cooperative operation, it is possible to assist the worker to correct the teaching content based on the quality of the weld bead formed on workpiece Wk and the absolute speed of each of manipulator MC and positioner PST.

As described above, robot control device CON in welding system 100 according to the exemplary embodiment calculates and outputs the absolute speed of manipulator MC and the absolute speed of positioner PST for each cooperative operation section. As a result, welding system 100 according to the exemplary embodiment can assist the correction of the teaching content by the worker for each cooperative operation section based on the quality of the weld bead formed on workpiece Wk and the absolute speed of each of manipulator MC and positioner PST. Therefore, the worker can minimize the correction of the teaching content.

As described above, robot control device CON in welding system 100 according to the exemplary embodiment stores the maximum value or the minimum value of the absolute speed of manipulator MC during the cooperative operation and the maximum value or the minimum value of the absolute speed of positioner PST during the cooperative operation, and outputs the maximum value or the minimum value of the absolute speed of manipulator MC and the maximum value or the minimum value of the absolute speed of positioner PST. As a result, welding system 100 according to the exemplary embodiment can output the maximum value or the minimum value of the absolute speed of each of manipulator MC and positioner PST. Therefore, the worker can intuitively determine whether or not each of manipulator MC and positioner PST during the cooperative operation is at an absolute speed that can affect the welding quality, and can more efficiently correct the teaching content.

As described above, welding system 100 according to the exemplary embodiment further includes teach pendant TP (an example of the teaching device) that is communicable with robot control device CON and performs teaching. Robot control device CON transmits speed information indicating the absolute speed of manipulator MC during the cooperative operation and the absolute speed of positioner PST during the cooperative operation to teach pendant TP. Teach pendant TP generates and displays work result screen SC1 including the speed information. As a result, welding system 100 according to the exemplary embodiment can assist the correction of the teaching content by the worker by displaying the absolute speed of each of manipulator MC and positioner PST during the cooperative operation on teach pendant TP.

As described above, teach pendant TP in welding system 100 according to the exemplary embodiment generates and displays work result screen SC1 including the teaching information (for example, a teaching program) related to the teaching and the speed information. As a result, welding system 100 according to the exemplary embodiment can display the teaching contents performed by the worker and the absolute speed of each of manipulator MC and positioner PST during the cooperative operation on teach pendant TP. Therefore, the worker can more easily examine the portion to be corrected in the teaching content based on work result screen SC1.

While various exemplary embodiments have been described above with reference to drawings, it is obvious that the present disclosure is not limited thereto. It is obvious that those skilled in the art can conceive various changes, modifications, substitutions, additions, deletions, and equivalents within the scope described in the claims, and it is understood that these naturally belong to the technical scope of the present disclosure. In addition, the respective constituent elements in the above-described various exemplary embodiments may be arbitrarily combined without departing from the gist of the invention.

### INDUSTRIAL APPLICABILITY

The present disclosure is useful as a welding robot system and a welding assistance method that support teaching of cooperative operation performed by a plurality of different devices.

### REFERENCE MARKS IN THE DRAWINGS

- 11: CPU
- 12: welding unit
- 13A: RAM
- 13B: ROM
- 14: drive unit
- 21: welding torch
- 100: welding system
- CON: robot control device
- MC: manipulator
- MN: monitor
- PST: positioner
- SC1: work result screen
- TP: teach pendant
- Wk: workpiece

## Claims

1. A welding robot system comprising:
a robot that performs welding on a workpiece;
a workpiece holding device that holds the workpiece; and
a control device connected to the robot and the workpiece holding device,
wherein the control device
acquires teaching related to the robot and the workpiece holding device,
controls the robot and the workpiece holding device to perform cooperative operation based on the teaching, and
calculates and outputs an absolute speed of the robot during the cooperative operation and an absolute speed of the workpiece holding device during the cooperative operation.

2. The welding robot system according to Claim 1, wherein
the control device
calculates an absolute speed of the robot and an absolute speed of the workpiece holding device for each cooperative operation section based on the teaching, and
outputs the absolute speed of the robot and the absolute speed of the workpiece holding device.

3. The welding robot system according to Claim 1, wherein
the control device
stores a maximum value or a minimum value of an absolute speed of the robot during the cooperative operation and a maximum value or a minimum value of an absolute speed of the workpiece holding device during the cooperative operation, and
outputs the maximum value or the minimum value of the absolute speed of the robot and the maximum value or the minimum value of the absolute speed of the workpiece holding device.

4. The welding robot system according to Claim 1, further comprising a teaching device that is communicable with the control device and performs the teaching,
wherein the control device transmits speed information indicating an absolute speed of the robot during the cooperative operation and an absolute speed of the workpiece holding device during the cooperative operation to the teaching device, and
the teaching device generates and displays a work result screen including the speed information.

5. The welding robot system according to Claim 4, wherein the teaching device generates and displays a work result screen including teaching information related to the teaching and the speed information.

6. A welding assistance method performed by a system including:
a robot that performs welding on a workpiece;
a workpiece holding device that holds the workpiece; and
a control device connected to the robot and the workpiece holding device, the method comprising:
acquiring teaching related to the robot and the workpiece holding device;
controlling the robot and the workpiece holding device to perform cooperative operation based on the teaching; and
calculating and outputting an absolute speed of the robot during the cooperative operation and an absolute speed of the workpiece holding device during the cooperative operation.
